# EUROPÄISCHE PATENTSCHRIFT

(11) **EP 3 069 049 B1**
(45) Veröffentlichungstag und Bekanntmachung des Hinweises auf die Patenterteilung: **08.07.2020**
(21) Anmeldenummer: 14784250.4
(22) Anmeldetag: 16.10.2014
(51) Int. Cl.: F16H 41/26, F16H 61/56

(54) **HYDRODYNAMISCHER WANDLER MIT VERSTELLEINRICHTUNG**
HYDRODYNAMIC CONVERTER WITH ADJUSTMENT DEVICE
CONVERTISSEUR HYDRODYNAMIQUE AVEC DISPOSITIF DE RÉGLAGE

(30) Priorität: 14.11.2013 DE 102013223203; 15.07.2014 DE 102014213726
(43) Veröffentlichungstag der Anmeldung: 21.09.2016
(73) Patentinhaber: Voith Patent GmbH, 89522 Heidenheim (DE)
(72) Erfinder: SCHIRLE, Hans, 74597 Stimpfach (DE); GRAF, Hartmut, 73660 Urbach (DE)
(74) Vertreter: Voith Patent GmbH - Patentabteilung
(86) Internationale Anmeldenummer: PCT/EP2014/072178
(87) Internationale Veröffentlichungsnummer: WO 2015/071042

(56) Entgegenhaltungen:
- FR-A- 1 248 173
- US-A- 2 935 898
- US-A- 2 995 955

## Beschreibung

Die vorliegende Erfindung betrifft einen hydrodynamischen Wandler mit den Merkmalen des Oberbegriffs des Anspruchs 1. Ein gattungsgemäßer Wandler ist bspw. aus US 3,151,457 bekannt.

Hydrodynamische Wandler oder Drehmomentwandler weisen mindestens drei Schaufelräder auf, d.h. ein Pumpenrad, ein Turbinenrad und ein Leitrad, die eine in einem Arbeitsraum umlaufende Strömung umlenken. Diese Grundbauform wird als einstufig bezeichnet. Verfügt der Wandler über eine Einrichtung, die eine Veränderung der Kreislaufströmung im Betrieb ermöglicht, so handelt es sich um einen beeinflussbaren Wandler. Ein Beispiel für einen solchen Wandler ist der Stellwandler, dessen Schaufeln im Betrieb von außen verstellt werden können.

Das Pumpenrad, welches mit dem Antrieb gekoppelt ist, überträgt das vom Antrieb erzeugte Pumpenradmoment auf das im Arbeitsraum strömende Betriebsmedium. Das Betriebsmedium überträgt das Moment auf das Turbinenrad, welches mit dem Abtrieb gekoppelt ist. Zusätzlich wird durch das im Arbeitsraum und mit dem Gehäuse fest verbundene Leitrad und dessen Leitschaufeln ein Umlenken des Betriebsmediums erzeugt. Durch das Umlenken des Betriebsmediums an den Leitschaufeln, wird das vom Betriebsmedium an das Turbinenrad abgegebene Moment verstärkt. So kann das Ausgangsdrehmoment bis beispielsweise zum 2,5 bis 12-fachen des Eingangsdrehmoments betragen.

Wandler mit starren Schaufeln weisen einen einzigen Betriebszustand auf, bei dem eine optimale Anströmrichtung für die Schaufel aller Räder gegeben ist. Bei Abweichungen von diesem Betriebszustand ergeben sich neben den Reibungsverlusten zusätzliche Strömungsverluste, die umso größer werden, je größer die Abweichungen von dem optimalen Betriebszustand sind. Aus diesem Grund werden verstellbare Leitrad- bzw. Pumpenradschaufeln verbaut.

Aus dem Stand der Technik sind hydrodynamische Wandler bekannt, die eine Verstellung der Pumpenradschaufeln ermöglichen.

US 3,330,112 zeigt einen Drehmomentwandler, dessen Pumpenschaufeln drehbar gelagert sind. Der Anstellwinkel der Schaufeln ist durch eine Umlenkeinrichtung veränderbar. Dazu sind die Pumpenschaufeln jeweils über ein Gelenk mit einem gemeinsamen Verstellring verbunden, so dass durch eine relative Rotationsbewegung des Verstellrings zum Pumpenrad der Anstellwinkel der Pumpenschaufeln eingestellt werden kann. Der Verstellring ist mechanisch über eine Verzahnung mit einem in Achsrichtung der Antriebswelle verschiebbaren Teilabschnitt gekoppelt, wodurch die gewünschte relative Rotationsbewegung des Verstellrings erzeugt werden kann. Die translatorische Verschiebung des Teilabschnitts wird durch zwei voneinander getrennten Druckkammern gesteuert.

US 3,151,457 offenbart einen Wandler, wobei ein Teilbereich der Schaufel des Pumpenrads durch eine Umlenkeinrichtung angestellt werden kann. Dazu wird ein Zylinder durch einen Druckkanal, der in den Innenbereich des Pumpenrads geführt ist, mit Hydraulikflüssigkeit versorgt. Der Zylinder verdreht durch eine Hubbewegung des Zylinderkolbens einen Verstellring. Durch die Verdrehung des Verstellrings wird die gewünschte Änderung des Winkels der Pumpenradschaufeln erzeugt.

Durch den Druckkanal muss über eine längere Strecke der erforderliche Druck aufgebaut werden. Darüber hinaus muss in den rotierenden Bauteilen des Wandlers eine entsprechende Abdichtung des Druckkanals gewährleistet werden, um dauerhaft eine Winkeländerung des Teilbereichs der Pumpenradschaufeln im Betriebszustand des Wandlers sicherzustellen.

Die Druckschrift US2,935,898 offenbart eine komplexe hydraulisch-mechanische Verstellvorrichtung (über Zahnräder) für Pumpenschaufeln,

Verstelleinrichtungen für Schaufeln anderer Schaufelräder, beispielsweise Turbinenradschaufeln zur Änderung des Übertragungsverhalten des Abtriebs sind FR 1248173 A und US 2,995,955 zu entnehmen.

Vor diesem Hintergrund besteht die Aufgabe der Erfindung darin, einen kompakt aufgebauten und robusten hydrodynamischen Wandler anzugeben, der eine verschleißarme Verstelleinrichtung zur Verstellung wenigstens einer Stellschaufel des Pumpenrades aufweist.

Die Erfindung wird mit Blick auf den hydrodynamischen Wandler durch den Gegenstand des Anspruchs 1 gelöst.

Die Erfindung beruht demnach darauf, einen hydrodynamischen Wandler anzugeben, der einen Arbeitsraum aufweist, der von einem Betriebsmedium durchströmbar ist.

Der Wandler umfasst ein Pumpenrad, das mit einer Antriebswelle verbunden ist, ein Turbinenrad, das mit einer Abtriebswelle verbunden ist sowie ein Leitrad. Bei dem erfindungsgemäßen Wandler handelt es sich um einen sogenannten Stellwandler, der wenigstens eine Stellschaufel aufweist, die durch eine Verstelleinrichtung verstellbar ist. Der erfindungsgemäße Wandler zeichnet sich dadurch aus, dass die Verstelleinrichtung einen Stellantrieb mit Ringelementen aufweist, die jeweils koaxial zur Antriebswelle angeordnet sind. Ein erstes Ringelement ist dabei mit der wenigstens einen Stellschaufel zur Übertragung einer Stellkraft oder eines Stellmomentes wenigstens mittelbar, d.h. direkt oder über weitere Übertragungseinrichtungen durch eine Umlenkeinrichtung verbunden. Das erste Ringelement ist relativ zu einem zweiten Ringelement in Umfangsrichtung der Antriebswelle verdrehbar.

Wenigstens mittelbar bedeutet direkt oder indirekt unter Zwischenordnung weiterer Übertragungselemente.

Die Erfindung hat den Vorteil, dass nur wenig verschleißbehaftete, mechanische Bauteile erforderlich sind, um eine Stellkraft oder ein Stellmoment zu erzeugen. Dies wird allgemein dadurch erreicht, dass die Krafterzeugung, Einleitung und Übertragung im Wesentlichen durch rotatorische Bewegungen der Verstelleinrichtung erfolgt.

Konkret wird dies bei der Erfindung dadurch erreicht, dass Ringelemente vorgesehen sind, die den Stellantrieb bilden und die in Umfangsrichtung der Antriebswelle relativ zueinander verdrehbar sind. Das erste Ringelement ist durch die Umlenkeinrichtung mit der Stellschaufel gekoppelt. Das durch die Relativdrehung des ersten Ringelements bezogen auf das zweite Ringelement erzeugte Stellmoment bzw. die Stellkraft wird durch die Umlenkeinrichtung in die Stellschaufel eingeleitet und halten diese in der gewünschten Stellung.

Die Ringelemente sind jeweils koaxial zur Antriebswelle angeordnet, was zu einem kompakten Aufbau des Stellantriebs führt.

Vorzugsweise ist das erste Ringelement hydraulisch verdrehbar.
Stellantrieb und Umlenkeinrichtung werden gemäß einer ersten Ausbildung von separaten Einrichtungen gebildet. Diese können in besonders vorteilhafter Ausbildung in bauraumsparender Weise in einer axialen Ebene mit Versatz in radialer Richtung zueinander angeordnet sein. Eine alternative Ausbildung besteht in der Anordnung in axialer Richtung mit Versatz frei von Versatz in radialer Richtung oder mit Versatz.

In einer vorteilhaften Weiterbildung ist die Umlenkeinrichtung vom Stellantrieb gebildet. Diese Lösung bietet den Vorteil einer besonders bauraumsparenden Anordnung und geringem konstruktivem Aufwand.

Die Stellschaufel bildet einen Teil des Schaufelkranzes des Pumpenrades. Dabei kann eine einzige Stellschaufel des Schaufelkranzes oder es können mehrere, insbesondere alle Schaufeln des Schaufelkranzes verstellbar sein. Die verstellbare Pumpenschaufel bewirkt eine Veränderung des Strömungswinkels des im Arbeitsraum strömenden Betriebsmediums und drosselt den Volumenstrom. Dadurch kann das im Arbeitsraum abgegebene Pumpenmoment verändert werden. Strömungstechnisch hat dies den Vorteil, dass sich das Pumpenmoment stark ändert, weil sich bei verstärkter Neigung der Pumpenschaufeln Austritts- und Eintrittsradius nähern. Außerdem wird die Umfangskomponente der Strömungsgeschwindigkeit vermindert. Die Leistungsaufnahme kann durch die Verstellung von Schaufeln oder Schaufelbestandteilen des Pumpenrades gezielt beeinflusst, insbesondere gesteuert werden.

Die Verstelleinrichtung ist vorzugsweise für hydrodynamische Gegenlaufwandler, insbesondere einstufige Gegenlaufwandler in Kombination mit der Verstellung der Beschaufelung am Pumpenrad geeignet. Diese bietet den Vorteil einer konstruktiv besonders einfachen Einbindung der Verstelleinrichtung aufgrund der baumäßig bedingten guten Zugängigkeit zum Pumpenrad. Andere Wandlertypen können ebenfalls mit der Verstelleinrichtung ausgerüstet werden.

Die koaxiale Anordnung der Ringelemente zur Antriebswelle ermöglicht einen einfachen und kompakten Aufbau der Verstelleinrichtung und somit des Wandlers, wodurch sowohl der konstruktive Aufwand als auch das Verschleißrisiko verringert wird.

Bei einer bevorzugten Ausführungsform ist das zweite Ringelement drehfest mit der Antriebswelle verbunden und nimmt das erste Ringelement bei einer Drehung der Antriebswelle mit. Diese Ausführungsform ist besonders für die Verstellung der Pumpenschaufel geeignet, weil die Ringelemente mit derselben Drehzahl rotieren, wie das Pumpenrad. Durch eine Einstellung der Winkellage zwischen dem ersten und zweiten Ringelement wird die Position der Stellschaufel beeinflusst. Da beide Ringelemente mit der Antriebswelle mitdrehen, kommt es zu einer Relativbewegung zwischen den Bauteilen nur während des Verstellvorganges. Vor und nach dem Verstellvorgang findet keine Relativbewegung zwischen der Antriebswelle, den Ringelementen und dem Pumpenrad statt, so dass die vorgenannten Elemente zusammen eine rotierende Einheit bilden.

Das erste und zweite Ringelement bilden wenigstens zwei in Umfangsrichtung der Antriebswelle angeordnete Druckkammern, die für die Relativdrehung zwischen dem ersten und zweiten Ringelement jeweils mit Druck beaufschlagbar sind. Die Betätigung des ersten Ringelements erfolgt hydraulisch. Damit werden mechanische Stellglieder, wie bspw. Rückstellfedern, vermieden. Die Rückstellung bzw. allgemein die Positionsänderung des ersten Ringelements erfolgt hydraulisch. Durch die beiden Druckkammern kann die Positionsänderung in beiden Umfangsrichtungen vorgenommen werden.

Durch Einstellung geeigneter Drücke in den Druckkammern kann eine Winkellage der beiden Ringelemente und somit ein gewünschter Anstellwinkel der Stellschaufel gehalten werden. Ein weiterer Vorteil dieser Ausführung ist die stufenlose Verstellbarkeit der Stellschaufel.

Das erste Ringelement kann ein zylinderförmiges Gehäuse bilden, in dem das zweite Ringelement angeordnet ist. Damit wird eine besonders kompakte Ausgestaltung des Stellantriebs erreicht.

Vorzugsweise weisen das erste und zweite Ringelement jeweils radial sich erstreckende, gegengleich angeordnete Flügel auf, die die Druckkammern in Umfangsrichtung begrenzen. Die gegengleich angeordneten Flügel greifen dabei ineinander ein und können in Umfangsrichtung so voneinander beabstandet werden, dass Druckkammern mit veränderbarem Volumen gebildet werden. Durch Beaufschlagung der Druckkammern mit unterschiedlichen Drücken, wird das erste Ringelement bezogen auf das zweite Ringelement im Uhrzeigersinn oder im Gegenuhrzeigersinn gedreht. Dadurch ist eine Verstellung der Stellschaufel in verschiedenen Richtungen möglich.

Die Flügel können zur Abdichtung der Druckkammern radial angeordnete Dichteinrichtungen und/oder axiale Dichteinrichtungen aufweisen. Die Dichteinrichtungen umfassen zumindest ein Dichtelement oder können auch als berührungslose Dichteinrichtungen ausgeführt sein.

Die Druckkammern weisen bei einer bevorzugten Ausführungsform in Umfangsrichtung der Antriebswelle angeordnete Anschläge zur Begrenzung der Relativdrehung zwischen dem ersten und zweiten Ringelement auf. Die Anschläge legen somit den Hub des ersten Ringelements in Umfangsrichtung fest. Die Anschläge können austauschbar ausgebildet sein, sodass zum einen bei Verschleiß die Anschläge ersetzt und zum anderen der Hub bzw. Stellweg des ersten Ringelements eingestellt werden kann.

Das erste Ringelement kann allgemein als ein rotierender Zylinder aufgefasst werden, dessen Hub in Umfangsrichtung wirkt.

Vorzugsweise sind in wenigstens einem Ringelement, insbesondere im zweiten Ringelement Bohrungen ausgebildet, die zur Druckbeaufschlagung in die Druckkammern, insbesondere im Bereich des Außendurchmessers münden. Die Ausbildung der Bohrungen im zweiten Ringelement hat den Vorteil, dass die Zufuhrkanäle in der Antriebswelle gebildet sein können, die mit den im zweiten Ringelement ausgebildeten Bohrungen fluidverbunden sind. Die Mündung der Bohrungen im Bereich des Außendurchmessers des zweiten Ringelements hat den Vorteil, dass dadurch eine Spülung der Druckkammern erreicht wird. Etwaige am Außendurchmesser anhaftende Verunreinigungen, die sich im Betrieb dort ansammeln, werden durch die Einleitung des Arbeitsmediums im Bereich des Außendurchmessers gelöst bzw. vermieden.

Bei einer besonders bevorzugten Ausführungsform weist die Umlenkeinrichtung einen Verstellring auf, der koaxial zur Antriebswelle angeordnet und drehfest mit dem ersten Ringelement verbunden ist. Der Verstellring ist mit der wenigstens eine Stellschaufel zur Übertragung einer Stellkraft oder eines Stellmomentes gekoppelt.

Der Verstellring trägt zur kompakten Bauweise des Wandlers bei, da dieser, wie die Ringelemente, koaxial zur Antriebwelle angeordnet ist. Durch die drehfeste Verbindung des Verstellringes mit dem ersten Ringelement werden etwaige mechanische Koppelbauteile vermieden. Vielmehr wird das für die Verstellung der Verstellschaufel erforderliche Stellmoment direkt vom ersten Ringelement in den Verstellring eingeleitet. Die drehfeste Verbindung zwischen dem Verstellring und dem Ringelement kann beispielsweise durch eine stoffschlüssige Verbindung wie eine Schweißverbindung, oder durch form- oder kraftschlüssige Verbindungen erreicht werden.

Die Kopplung des Verstellrings mit der Stellschaufel kann bei einer weiteren Ausführungsform dadurch erfolgen, dass der Verstellring wenigsten einen Nocken aufweist, der mit einem Kurbeltrieb zusammen wirkt. Der Kurbeltrieb ist mit der Stellschaufel gekoppelt. Die Ansteuerung der Stellschaufel durch einen Kurbeltrieb ist an sich bekannt, sodass diesbezüglich auf bereits vorhandene Konstruktionen zurückgegriffen werden kann. Die Ausbildung des Nockens am Verstellring hat gegenüber dem Stand der Technik den Vorteil, dass für die Krafteinleitung in den Kurbeltrieb keine gesonderten mechanischen Bauteile erforderlich sind. Vielmehr wird der Kurbeltrieb direkt durch den Nocken betätigt. Die Rückstellkraft wird durch das an der Stellschaufel anliegende Moment im Arbeitsraum erzeugt. Vorzugsweise bildet der Kurbeltrieb ein radial angeordnetes Hebelelement, das die Drehbewegung des Verstellrings in eine translatorische Bewegung umwandelt. Durch die Kopplung des Hebelelements mit der Stellschaufel wird in an sich bekannte Weise die Stellbewegung erreicht.

Bei einer alternativen Ausführungsform weist der Verstellring eine Außenverzahnung auf, die mit der Außenverzahnung eines Zapfens der Stellschaufel kämmt. Der Zapfen erstreckt sich parallel zur Mittelachse des Verstellringes. Diese Ausführung hat den Vorteil, dass die rotatorische Bewegung des Verstellringes direkt in eine Drehbewegung der Stellschaufel umgewandelt wird. Damit wird die Anzahl der mechanischen Bauteile weiter reduziert.

Die Stellschaufel kann eine Verdrehschaufel oder eine mehrgliedrige Schaufel mit wenigstens einem Verdrehsegment umfassen. Verdrehschaufeln und mehrgliedrige Schaufeln sind an sich bekannt, wobei eine Verdrehschaufel eine einteilige Stellschaufel bedeutet, die als Ganzes verstellbar ist. Bei einer mehrgliedrigen Schaufel steht ein Schaufelsegment fest. Wenigstens ein weiteres Schaufelsegment ist verdrehbar. Der Antrieb für das verdrehbare Schaufelsegment wird durch die Verstelleinrichtung bewirkt.

Bei den Verdrehschaufeln oder verstellbaren Schaufelsegmenten handelt es sich um drehbar gelagerte Schaufeln beziehungsweise Schaufelteile, deren Winkellage gegenüber einer durch die Erstreckung in radialer Richtung beschreibbaren Ausgangslage durch Verdrehen um eine definierte Drehachse veränderbar ist. Die Ausgangslage beschreibt eine erste Funktionsstellung, jede weitere aus dieser ausgelenkte Lage eine weitere Funktionsstellung.

Die bevorzugte Ausführung, wonach ein Sensor zur Erfassung der Winkellage zwischen dem ersten und zweiten Ringelement vorgesehen ist, ist besonders geeignet für Systeme, bei denen die Aufnahmeleistung geregelt wird. Dazu wird das vom Sensor ausgegebene Winkelsignal verwendet.

Die Erfindung betrifft ferner eine Verstelleinrichtung für einen hydrodynamischen Wandler. Die Verstelleinrichtung weist einen Stellantrieb mit konzentrisch angeordneten Ringelementen auf. Die Ringelemente sind zueinander konzentrisch angeordnet. Ein erstes Ringelement ist dazu angepasst, mit wenigstens einer Stellschaufel des Wandlers zur Übertragung einer Stellkraft oder eines Stellmoments durch eine Umlenkeinrichtung verbunden zu werden. Für die Stellbewegung der Stellschaufel ist das erste Ringelement relativ zu einem zweiten Ringelement in Umfangsrichtung der beiden Ringelemente verdrehbar. Zu den weiteren Vorteilen einer solchen Verstelleinrichtung wird auf die Ausführung im Zusammenhang mit dem hydrodynamischen Wandler verwiesen.

Beispielhafte Ausführungsformen der Verstelleinrichtung sind vorstehend im Zusammenhang mit dem hydrodynamischen Wandler beschrieben. Die Verstelleinrichtung gemäß Anspruch 15 wird unabhängig von dem hydrodynamischen Wandler auch im Zusammenhang mit den in den Ansprüchen 1 bis 14 angegebenen Ausführungsformen offenbart und beansprucht, soweit diese die Verstelleinrichtung betreffen.

Die Erfindung wird nachfolgend mit weiteren Einzelheiten unter Bezug auf die beigefügten Zeichnungen näher beschrieben. Darin zeigen:
- Fig. 1:: einen Längsschnitt eines erfindungsgemäßen Wandlers entlang der Antriebwelle;
- Fig. 2:: einen Querschnitt durch den Stellantrieb des Wandlers gemäß Figur 1; und
- Fig. 3:: einen Ausschnitt des Stellantriebs gemäß Figur 2.

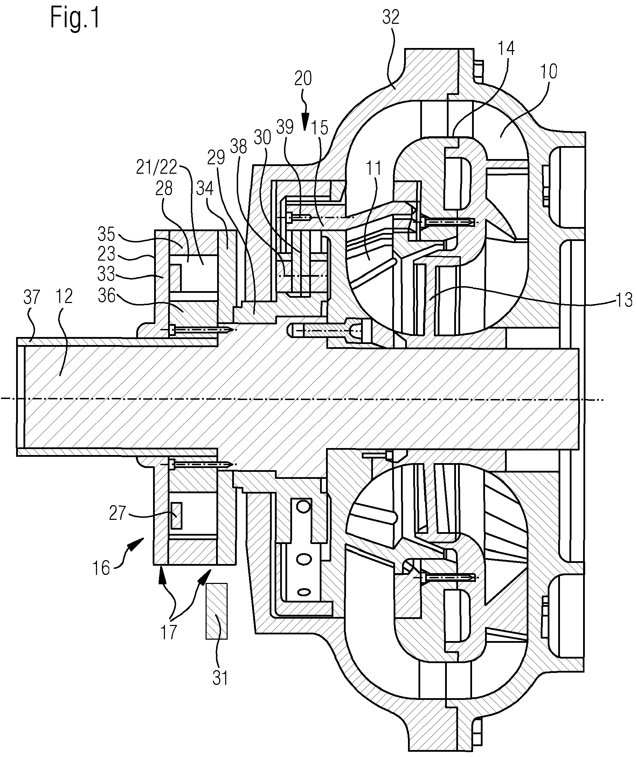

Figur 1 zeigt einen Längsschnitt durch einen hydrodynamischen Wandler nach einem erfindungsgemäßen Ausführungsbeispiel. Derartige Wandler kommen beispielsweise bei der Regelung von Pumpen oder Kompressoren zum Einsatz und können mit mechanischen Getrieben, beispielsweise Planetengetrieben gekoppelt sein. Dabei sind unterschiedliche Einsatzarten denkbar. Möglich sind Drehzahl geregelte Antriebe im Leistungsbereich beispielsweise von 1 bis über 50 MW in der Öl- und Gasindustrie und in thermischen Kraftwerken. Die Erfindung ist nicht auf derartige Einsatzarten eingeschränkt, sondern bezieht sich allgemein auf hydrodynamische Wandler.

Bei dem in Figur 1 beispielhaft dargestellten Wandler handelt es sich konkret um einen einphasigen Gegenlaufwandler mit einem Pumpenrad 11, einem Turbinenrad 13 und einem Leitrad 14. Bei dem dargestellten Gegenlaufwandler drehen das Pumpenrad 11 und das Turbinenrad 13 gegensinnig. Das Leitrad 14 ist fest mit dem Leitradgehäuse 32 verbunden (einphasiger Wandler). Das Leitrad 14 bildet bei dem Ausführungsbeispiel gemäß Figur 1 ein Umkehrleitrad, das zwischen dem Pumpenrad 11 und dem Turbinenrad 13 angeordnet ist.

Die Erfindung ist nicht auf den dargestellten Gegenlaufwandler beschränkt. Alle anhand von Fig. 1-3 beschriebenen Merkmale werden allgemein im Zusammenhang mit einem hydrodynamischen Wandler offenbart und beansprucht.

Beispielsweise können mehrstufige Gegenlaufwandler erfindungsgemäß ausgebildet sein. Es ist auch denkbar, die Erfindung bei Gleichlaufwandlern einzusetzen, bei denen das Pumpenrad 11 und das Turbinenrad 13 gleichsinnig umlaufen. Es ist auch denkbar, die Erfindung bei mehrphasigen hydrodynamischen Wandlern einzusetzen, bei denen ebenfalls wiederrum einstufige oder mehrstufige Bauformen möglich sind.

Konkret weist der in Figur 1 dargestellte Wandler einen Arbeitsraum 10 auf, der von einem Betriebsmedium durchströmbar ist. Der Wandler weist ein Pumpenrad 11 auf, das mit einer Antriebswelle 12 verbunden ist, sowie ein Turbinenrad 13, das mit einer Abtriebswelle (nicht dargestellt) verbunden ist. Das Turbinenrad 13 ist beispielsweise drehbar auf der Antriebswelle 12 gelagert. Bei dem Ausführungsbeispiel gemäß Figur 1 ist das Leitradgehäuse 32 mit dem Leitrad 14 ortsfest angeordnet. Umlaufende Leitradgehäuse 32 sind möglich. Das Leitradgehäuse 32 bildet zusammen mit dem Gehäuse des Turbinenrades 13 sowie mit dem Gehäuse des Pumprades 11 einen schalenförmig umschlossenen Arbeitsraum 10, in dem sich im Betrieb der Strömungskreislauf ausbildet.

Das Pumpenrad 11 ist drehfest mit der Antriebswelle 12 verbunden. Dazu ist eine Wellenschulter in der Antriebswelle 12 ausgebildet, mit der das Pumpenrad 11 axial verschraubt ist. Andere Wellen-Nabenverbindungen sind möglich.

Das Pumpenrad 11 weist wenigstens eine Stellschaufel 15 auf. Die weiteren Pumpenschaufeln des Pumpenrades 11 können ebenfalls als Stellschaufeln 15 entsprechend ausgebildet sein. Alternativ können die übrigen Pumpenschaufeln starr ausgebildet sein.

Der Stellschaufel 15 ist eine Verstelleinrichtung 16 zugeordnet, die im Betrieb des Wandlers mit dem Pumpenrad 11 mitrotiert. Die Verstelleinrichtung 16 weist eine Umlenkeinrichtung 20 sowie einen Stellantrieb 17 auf. Die Umlenkeinrichtung 20 koppelt den Stellantrieb 17 mit der Stellschaufel 15.

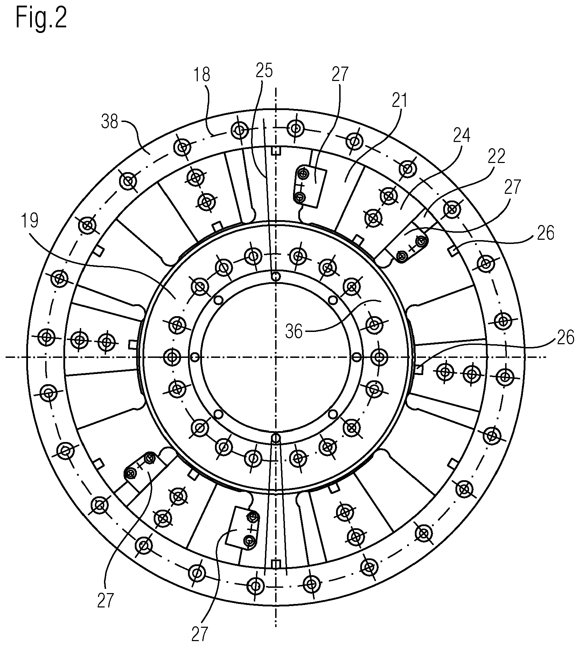

Der Stellantrieb 17 weist Ringelemente 18, 19 auf, die jeweils koaxial zur Antriebswelle 12 angeordnet sind, d.h. die beiden Ringelemente 18, 19 sind auch konzentrisch angeordnet (siehe auch Figur 2).

Das erste Ringelement 18 ist bezogen auf das zweite Ringelement 19 in Umfangsrichtung der Antriebswelle 12 verdrehbar. Durch die Drehbewegungen des ersten Ringelements 18 wird die Umlenkeinrichtung 20 betätigt, die die Drehbewegung des Ringelements 18 auf die Stellschaufel 15 überträgt und den Anstellwinkel der Stellschaufel 15 ändert.

Konkret ist bei dem Ausführungsbeispiel gemäß Figur 1 das zweite Ringelement 19 innen angeordnet und drehfest mit der Antriebswelle 12 verbunden. Dies kann beispielsweise durch eine axiale Verschraubung des zweiten Ringelements 19 mit einer Wellenschulter der Antriebswelle 12 erfolgen. Das zweite Ringelement 19 dreht mit der Antriebswelle 12 mit. Das drehbar gelagerte erste Ringelement 18 bildet ein zylinderförmiges Gehäuse 23, das das zweite Ringelement 19 umschließt. Mit anderen Worten ist das zweite Ringelement 19 im Gehäuse 23 des ersten Ringelements 18 angeordnet. Dazu weist das erste Ringelement 18 eine in axialer Richtung außen angeordnete erste Stirnwand 33 sowie eine in axialer Richtung innen angeordnete zweite Stirnwand 34 auf, die das Gehäuse 23 in axialer Richtung begrenzen. Das Gehäuse 23 weist einen Außenring 35 auf, der das Gehäuse 23 in radialer Richtung begrenzt und der zwischen den beiden Stirnwänden 33, 34 angeordnet ist. Das Gegenstück zum Außenring 35 bildet der Innenring 36 des zweiten Ringelements 19, der direkt auf der Antriebswelle 12 sitzt und mit der Wellenschulter, wie vorstehend beschrieben, verschraubt ist. Wie in Figur 1 zu erkennen, übergreifen die beiden Stirnwände 33, 34 den Innenring 36 so, dass zwischen dem ersten und zweiten Ringelement 18, 19 ein Ringraum gebildet ist. Die erste Stirnwand 33 bildet eine Dichtfläche zum Außenumfang der Antriebswelle 12.

In Figur 2 ist ein Querschnitt der beiden montierten Ringelemente 18, 19 dargestellt, aus dem der Ringraum sowie die darin angeordneten Einbauten ersichtlich ist. Die beiden Ringelemente 18, 19 weisen jeweils radial angeordnete Flügel 24, 25 auf, die durch die Relativdrehung zwischen dem ersten und zweiten Ringelement 18, 19 als Drehflügel fungieren. Konkret weist das erste Ringelement 18 erste Flügel 24 auf, die am Außenring 35 befestigt sind und sich radial nach innen erstrecken. Das zweite Ringelement 19 weist zweite Flügel 25 auf, die am Innenring 36 ausgebildet sind und sich radial nach außen erstrecken. Die Flügel 24, 25 der beiden Ringelemente 18, 19 sind somit gegengleich angeordnet.

Zwischen den Flügeln 24, 25 der beiden Ringelemente 18, 19 sind Druckkammern 21, 22 ausgebildet, deren Volumen durch die Stellung der jeweiligen Flügel 24, 25 veränderbar ist. Mit anderen Worten ist der Abstand der Flügel 24, 25 in Umfangsrichtung durch eine Verdrehung des ersten Ringelements 18 veränderbar.

Jeweils ein Flügel 24 des ersten Ringelements 18 und ein weiterer Flügel 25 des zweiten Ringelements 19 begrenzen zusammen eine erste Druckkammer 21. Dazu liegt der erste Flügel 24 des ersten Ringelements 18 am Innenring 36 des zweiten Ringelements 19 dichtend an. Dasselbe gilt für den zweiten Flügel 25 des zweiten Ringelements 19 in entsprechender Weise, der am Innenumfang des Außenrings 35 des ersten Ringelements 18 dichtend anliegt. Die beiden Flügel 24, 25 erstrecken sich überdies in axialer Richtung zwischen den Stirnwänden 33 ,34, an denen die Flügel 24, 25 ebenfalls dichtend anliegen, sodass insgesamt eine geschlossene Druckkammer 21 gebildet ist, die Umfangsrichtung von den Flügeln 24, 25 und in radialer Richtung vom Außenring 35 und vom Innenring 36 begrenzt ist.
In Umfangsrichtung der beiden Ringelemente 18, 19 ist eine weitere Druckkammer 22 ausgebildet, die in entsprechender Weise von den Flügeln 24, 25 der beiden Ringelemente 18, 19 begrenzt ist.

Mit anderen Worten ist ein erster Flügel 24 des ersten Ringelements 18 zwischen zwei zweiten Flügeln 25 des zweiten Ringelements 19 angeordnet, so dass auf beiden Seiten des ersten Flügels 24 jeweils ein Druckraum 21, 22 ausgebildet ist.
Wie in Figur 2 zu erkennen, sind auf dem Umfang der beiden Ringelemente 18, 19 mehrere Druckkammern 21, 22 in entsprechender Weise ausgebildet, wobei jeweils ein erster Flügel 24 des ersten Ringelements 18 und ein zweiter Flügel 25 des zweiten Ringelements 19 alternierend angeordnet sind. Dadurch werden auf dem Umfang verteilt angeordnete Druckkammern 21, 22 gebildet, die sich auf beiden Seiten der ersten Flügel 24 des ersten Ringelements 18 erstrecken.

Die Druckkammern 21, 22 sind zur Erzeugung der relativen Drehung zwischen den beiden Ringelementen 18, 19 jeweils mit den Druck beaufschlagbar. Bei dem Ausführungsbeispiel gemäß Figur 2 wird der Druck hydraulisch erzeugt. Bei dem in Figur 2 dargestellten Betriebszustand herrscht in der ersten Druckkammer 21 ein höherer Druck als in der zweiten Druckkammer 22, so dass der erste Flügel 24 und damit das Ringelement 18 im Uhrzeigersinn verdreht ist. Durch eine Änderung der Druckverhältnisse in den beiden Druckkammern 21, 22 ist eine Verstellung des ersten Ringelements 18 im Gegenuhrzeigersinn möglich.

Das erste Ringelement 18 fungiert damit als Ringkolben.

Zur Begrenzung der Hubbewegung des ersten Ringelements 18 in Umfangsrichtung sind Anschläge 27 vorgesehen, gegen die der erste Flügel 24 des ersten Ringelements 18 anschlägt (siehe Figur 2). Die Anschläge 27 können beispielsweise als austauschbare Einstellsteine ausgebildet sein, die mit den zweiten Flügeln 25 des zweiten Ringelements 19 verschraubt oder anderweitig befestigt sind.
Die Anschläge 27 sind wie in Figur 2 dargestellt, sowohl auf beiden Seiten eines ersten Flügels 24 des ersten Ringelements 18 angeordnet, um die Verstellbewegung in beiden Umfangsrichtungen zu begrenzen. Außerdem sind weitere Anschläge 27 punktsymetrisch auf der gegenüberliegenden Seite des ersten Ringelements 18 angeordnet. Die Anschläge 27 sind im Längsschnitt der Figur 1 zu sehen.

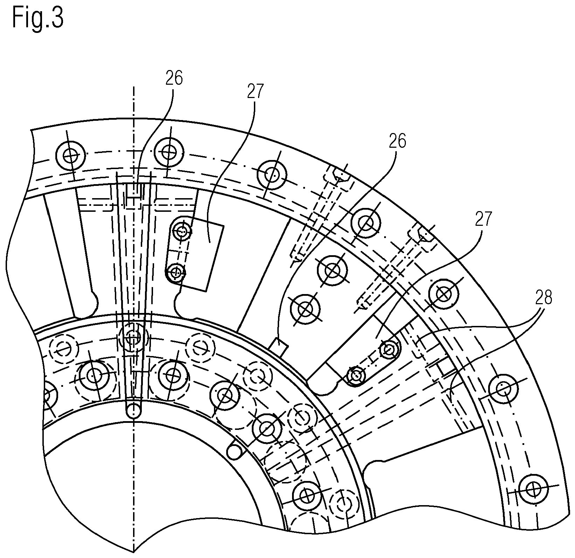

In der Detaildarstellung gemäß Figur 3 sind weitere Einzelheiten des Stellantriebs 17 zu erkennen. So ist beispielsweise Figur 3 zu entnehmen, dass im zweiten Ringelement 19 Bohrungen 28 ausgebildet sind, die als Druckkanäle zur Zufuhr der Hydraulikflüssigkeit dienen. Konkret sind die Druckkanäle im Innenring 36 ausgebildet und erstrecken sich durch die zweiten Flügel 25 radial nach außen. Die Bohrungen 28 münden in die jeweiligen Druckkammern 21, 22 im Bereich des Außendurchmessers der Druckkammern 21, 22 (s.a. Fig. 1). Mit anderen Worten ist der Abstand in den Mündungsöffnungen der Bohrungen 28 zum Außenring 35 sehr viel kleiner als der Abstand zum Innenring 36. Dadurch wird eine Spülwirkung erreicht, mit der weitgehend eine Anlagerung von Verunreinigungen am Außenring 35 verhindert wird.

Die Zufuhrkanäle, die die Bohrungen 28 des zweiten Ringelements 19 mit einer Zufuhreinrichtung (nicht dargestellt) verbinden, sind direkt in der Antriebswelle 12 oder in einem der Antriebswelle 12 zugeordneten Bauteil ausgebildet. Konkret ist zwischen dem Innenring 36 des zweiten Ringelements 19 und der Antriebswelle 12 eine Hülse 37 angeordnet, in der die Zufuhrkanäle für die Versorgung der Druckkammern 21, 22 mit Hydraulikflüssigkeit ausgebildet sind. Die Verbindung zwischen dem Innenring 36 und der Hülse 37 kann beispielsweise kraftschlüssig erfolgen.

Zur Übertragung der Drehbewegung des ersten Ringelements 18 auf die Stellschaufel 15 ist die nachstehend beschriebene Umlenkeinrichtung 20 vorgesehen. Die Umlenkeinrichtung 20 ist drehfest mit dem ersten Ringelement 18 verbunden. Dadurch ist ein Drehmoment in die Umlenkeinrichtung 20 einleitbar, das auf die Stellschaufel 15 übertragen wird. Die Übertragung durch die Umlenkeinrichtung 20 kann durch eine überlagerte translatorische / rotatorische Bewegung oder durch eine ausschließlich rotatorische Bewegung erfolgen. Das durch das erste Ringelement 18 eingeleitete Drehmoment versetzt die Stellschaufel 15 in eine Drehbewegung, wodurch der Anstellwinkel der Stellschaufel 15 verändert wird.

Konkret weist die Umlenkeinrichtung 20 hierfür einen Verstellring 29 auf, der koaxial angeordnet ist. Der Verstellring 29 sitzt auf dem Außendurchmessers der Antriebswelle 12 und ist relativ zu dieser drehbar. In axialer Richtung ist der Verstellring 29 beispielsweise am Gehäuse des Pumpenrades 11 abgestützt. Die drehfeste Verbindung des Verstellringes 29 mit dem Ringelement 18 erfolgt durch die innen angeordnete zweite Stirnwand 34 des Ringelements 18, die fest mit dem Verstellring 29 verbunden ist. Die Verbindung kann beispielsweise stoffschlüssig (Schweißverbindung) oder form- oder kraftschlüssig erfolgen. Die Wirkung der Verbindung besteht darin, den Verstellring 29 bei einer Drehung des ersten Ringelements 18 mitzunehmen.

Der Verstellring 29 weist einen Nocken oder Mitnehmer am axial innen angeordneten Ende auf, der mit einem Kurbeltrieb 30 zusammen wirkt. Der Kurbeltrieb 30 ist mit der Stellschaufel 15 gekoppelt. Konkret weist der Kurbeltrieb 30 ein Hebelelement 31 bzw. eine Schub- und Zugstange auf, an deren unteren Ende ein Bolzen 38 befestigt ist. Die Drehachse des Bolzens verläuft parallel zur Mittelachse der Antriebswelle 12. Das obere Ende des Hebelelements 31 greift an der Stellschaufel 15, konkret an einem exzentrisch angeordneten Zapfen 39 der Stellschaufel 15 an, der aus dem Gehäuse des Pumpenrades 11 axial hervorsteht.

Der Mitnehmer bildet zusammen mit dem Bolzen 38 ein Drehgelenk, um das der Kurbeltrieb 30 verschwenkbar ist. Die Verschwenkbewegung erfolgt in Umfangsrichtung der Antriebswelle 12. Der Mitnehmer fungiert als Gleitlager, in dem der Bolzen 38 drehbeweglich angeordnet ist.

Das vom Verstellring 29 eingeleitete Verstellmoment wird über den Bolzen 38, der im Mitnehmer des Verstellrings 29 abgestützt wird, auf den Kurbeltrieb 30 übertragen. Der Kurbeltrieb 30 wandelt die rotatorische Bewegung des Verstellrings 29 in eine überlagerte translatorische / rotatorische Bewegung des Kurbeltriebs 30 um, die eine Kippbewegung der Stellschaufel 15 bewirkt, so dass der gewünschte Anstellwinkel der Stellschaufel 15 eingestellt werden kann.

Eine alternative Übertragung der Drehbewegungen des ersten Ringelements 18 auf die Stellschaufel 15 kann durch eine Außenverzahnung erfolgen, die am axial inneren Ende des Verstellrings 29 ausgebildet ist. Konkret kann das axial innere Ende des Verstellrings 29 ein Zahnrad oder Zahnradsegment bilden, das mit einer entsprechenden Außenverzahnung eines Zapfens der Stellschaufel 15 kämmt. Der Zapfen erstreckt sich parallel zur Mittelachse des Verstellrings 29. Andere mechanische Kopplungen des Verstellrings 29 mit der Stellschaufel 15 sind möglich. Ebenso kann die Stellschaufel 15 eine Verdrehschaufel bilden, wie in Figur 1 dargestellt, die als Ganzes verdreht wird. Alternativ kann die Schaufel 15 eine mehrgliedrige Schaufel 15 sein, die wenigstens ein verstellbares Verdrehsegment aufweist.

Wie in Figur 1 dargestellt weist der Wandler einen Sensor 40 zur Erfassung der Winkellage zwischen dem ersten und zweiten Ringelement 18, 19 auf. Der Sensor 40 ermöglicht die Regelung der Aufnahmeleistung des Pumpenrades. Zusammengefasst funktioniert der Wandler gemäß Figur 1 wie folgt:
Zur Verstellung der Beschaufelung des Pumpenrades 11 wird der Stellantrieb 17 betätigt. Dazu werden die Druckkammern 21, 22 mit unterschiedlichen Drücken beaufschlagt, so dass das erste Ringelement 18 bezogen auf das zweite Ringelement 19 in Umfangsrichtung verdreht wird. Durch die Drehbewegung wird der Verstellring 29 in Umfangsrichtung verdreht, wodurch der Kurbeltrieb 30 betätigt wird. Der Kurbeltrieb 30 wandelt die rotatorische Bewegung des Verstellrings 29 in eine überlagerte translatorische / rotatorische Bewegung um, die eine Kippbewegung der Stellschaufel bewirkt, so dass der gewünschte Anstellwinkel der Stellschaufel 15 eingestellt werden kann. Die Position der Stellschaufel 15 wird durch die Druckverhältnisse im Stellantrieb 17 gehalten.

### Bezugszeichenliste

- 10: Arbeitsraum
- 11: Pumpenrad
- 12: Antriebswelle
- 13: Turbinenrad
- 14: Leitrad
- 15: Stellschaufel
- 16: Verstelleinrichtung
- 17: Stellantrieb
- 18: erstes Ringelement
- 19: zweites Ringelement
- 20: Umlenkeinrichtung
- 21: Druckkammer
- 22: Druckkammer
- 23: zylindrisches Gehäuse
- 24: Flügel
- 25: Flügel
- 26: Dichtelemente
- 27: Anschläge
- 28: Bohrungen
- 29: Verstellring
- 30: Kurbeltrieb
- 31: Hebelelement
- 32: Leitradgehäuse
- 33: erste Stirnwand
- 34: zweite Stirnwand
- 35: Außenring
- 36: Innenring
- 37: Hülse
- 38: Bolzen
- 39: Zapfen
- 40: Sensor

## Patentansprüche

1. Hydrodynamischer Wandler mit
- einem Arbeitsraum (10), der von einem Betriebsmedium durchströmbar ist,
- einem Pumpenrad (11), das mit einer Antriebswelle (12) verbunden ist,
- einem Turbinenrad (13), das mit einer Abtriebswelle verbunden ist,
- einem Leitrad (14) und
- wenigstens einer Stellschaufel (15), die durch eine Verstelleinrichtung (16) verstellbar ist, wobei die wenigstens eine Stellschaufel (15) eine Pumpenradschaufelist;
**dadurch gekennzeichnet,**
**dass** die Verstelleinrichtung (16) einen Stellantrieb (17) mit Ringelementen (18,19) aufweist, die jeweils koaxial zur Antriebswelle (12) angeordnet sind, wobei ein erstes Ringelement (18) mit der wenigstens einen Stellschaufel (15) zur Übertragung einer Stellkraft oder eines Stellmomentes wenigstens mittelbar durch eine Umlenkeinrichtung (20) verbunden ist und das erste Ringelement (18) relativ zu einem zweiten Ringelement (19) in Umfangsrichtung der Antriebswelle (12) verdrehbar ist, wobei
das erste und zweite Ringelement (18, 19) wenigstens zwei in Umfangsrichtung der Antriebswelle (12) angeordnete Druckkammern (21, 22) bilden, die für die Relativdrehung zwischen dem ersten und zweiten Ringelement (18, 19) jeweils mit Druck beaufschlagbar sind.

2. Hydrodynamischer Wandler nach Anspruch 1,
**dadurch gekennzeichnet,**
**dass** die Umlenkeinrichtung (20) vom Stellantrieb gebildet wird.

3. Hydrodynamischer Wandler nach einem der Ansprüche 1 oder 2,
**dadurch gekennzeichnet,**
**dass** der Stellantrieb (17) und die Umlenkeinrichtung in einer axialen Ebene angeordnet sind.

4. Hydrodynamischer Wandler nach einem der Ansprüche 1 bis 3;
**dadurch gekennzeichnet,**
**dass** das zweite Ringelement (19) drehfest mit der Antriebswelle (12) verbunden ist und das erste Ringelement (18) bei einer Drehung der Antriebswelle (12) mitnimmt.

5. Hydrodynamischer Wandler nach einem der vorhergehenden Ansprüche,
**dadurch gekennzeichnet,**
**dass** das erste Ringelement (18) ein zylinderförmiges Gehäuse (23) bildet, in dem das zweite Ringelement (19) angeordnet ist.

6. Hydrodynamischer Wandler nach einem der vorhergehenden Ansprüche,
**dadurch gekennzeichnet,**
**dass** das erste und zweite Ringelement (18, 19) jeweils radial sich erstreckende, gegengleich angeordnete Flügel (24, 25) aufweisen, die die Druckkammern (21, 22) in Umfangsrichtung begrenzen.

7. Hydrodynamischer Wandler nach Anspruch 6,
**dadurch gekennzeichnet,**
**dass** die Flügel (24, 25) zur Abdichtung der Druckkammern (21, 22) radial angeordnete Dichtelemente (26) aufweisen.

8. Hydrodynamischer Wandler nach einem der Ansprüche 1 bis 5,
**dadurch gekennzeichnet,**
**dass** die Druckkammern (21, 22) in Umfangsrichtung der Antriebswelle (12) angeordnete Anschläge (27) zur Begrenzung der Relativdrehung zwischen dem ersten und zweiten Ringelement (18, 19) aufweisen.

9. Hydrodynamischer Wandler nach einem der Ansprüche 1 bis 8,
**dadurch gekennzeichnet,**
**dass** Bohrungen (28) in wenigstens einem Ringelement, insbesondere im zweiten Ringelement (19), ausgebildet sind, die zur Druckbeaufschlagung in die Druckkammern (21, 22), insbesondere im Bereich des Außendurchmessers, münden.

10. Hydrodynamischer Wandler nach einem der Ansprüche 1 bis 9,
**dadurch gekennzeichnet,**
**dass** die Umlenkeinrichtung (20) einen Verstellring (29) aufweist, der koaxial zur Antriebswelle (12) angeordnet und drehfest mit dem ersten Ringelement (18) verbunden ist, wobei der Verstellring (29) mit der wenigstens einen Stellschaufel (15) zur Übertragung einer Stellkraft oder eines Stellmomentes gekoppelt ist.

11. Hydrodynamischer Wandler nach Anspruch 10,
**dadurch gekennzeichnet,**
**dass** der Verstellring (29) wenigstens einen Nocken aufweist, der mit einem Kurbeltrieb (30), insbesondere einem radial angeordneten Hebelelement (31), zusammenwirkt, wobei der Kurbeltrieb (30) mit der Stellschaufel (15) gekoppelt ist.

12. Hydrodynamischer Wandler nach Anspruch 10,
**dadurch gekennzeichnet,**
**dass** der Verstellring (29) eine Außenverzahnung aufweist, die mit der Außenverzahnung eines Zapfens der Stellschaufel kämmt, der sich parallel zur Mittelachse des Verstellringes erstreckt.

13. Hydrodynamischer Wandler nach einem der Ansprüche 1 bis 12,
**dadurch gekennzeichnet,**
**dass** die Stellschaufel (15) eine Verdrehschaufel oder eine mehrgliedrige Schaufel mit wenigstens einem Verdrehsegment umfasst.

14. Hydrodynamischer Wandler nach einem der Ansprüche 1 bis 13,
**dadurch gekennzeichnet,**
**dass** der hydrodynamische Wandler als Gegenlaufwandler ausgeführt ist und die Verstelleinrichtung in axialer Richtung außerhalb des Wandlers, insbesondere dem Pumpenrad nebengeordnet angeordnet ist.

15. Hydrodynamischer Wandler nach einem der Ansprüche 1 bis 14,
**dadurch gekennzeichnet,**
**dass** ein Sensor (40) zur Erfassung der Winkellage zwischen dem ersten und zweiten Ringelement (18, 19) vorgesehen ist.

## Claims

1. Hydrodynamic converter with
- a working space (10), through which an operating medium can flow,
- a pump impeller (11) which is connected to a drive shaft (12),
- a turbine wheel (13) which is connected to an output shaft,
- a diffuser (14), and
- at least one adjusting blade (15) which can be adjusted by way of an adjusting device (16), the at least one adjusting blade (15) being a pump impeller blade;
**characterized**
**in that** the adjusting device (16) has an actuating drive (17) with ring elements (18, 19) which are arranged in each case coaxially with respect to the drive shaft (12), a first ring element (18) being connected at least indirectly by way of a deflecting device (20) to the at least one adjusting blade (15) for the transmission of an actuating force or an actuating torque, and it being possible for the first ring element (18) to be rotated relative to a second ring element (19) in the circumferential direction of the drive shaft (12),
the first and second ring element (18, 19) forming at least two pressure chambers (21, 22) which are arranged in the circumferential direction of the drive shaft (12) and can be loaded in each case with pressure for the relative rotation between the first and second ring element (18, 19).

2. Hydrodynamic converter according to Claim 1,
**characterized**
**in that** the deflecting device (20) is formed by the actuating drive.

3. Hydrodynamic converter according to either of Claims 1 and 2,
**characterized**
**in that** the actuating drive (17) and the deflecting device are arranged in an axial plane.

4. Hydrodynamic converter according to one of Claims 1 to 3,
**characterized**
**in that** the second ring element (19) is connected fixedly to the drive shaft (12) so as to rotate with it, and drives the first ring element (18) in the case of a rotation of the drive shaft (12).

5. Hydrodynamic converter according to one of the preceding claims,
**characterized**
**in that** the first ring element (18) forms a cylindrical housing (23), in which the second ring element (19) is arranged.

6. Hydrodynamic converter according to one of the preceding claims,
**characterized**
**in that** the first and second ring element (18, 19) in each case have radially extending vanes (24, 25) which are arranged in a diametrically opposed manner and delimit the pressure chambers (21, 22) in the circumferential direction.

7. Hydrodynamic converter according to Claim 6,
**characterized**
**in that** the vanes (24, 25) have radially arranged sealing elements (26) for sealing the pressure chambers (21, 22).

8. Hydrodynamic converter according to one of Claims 1 to 5,
**characterized**
**in that** the pressure chambers (21, 22) have stops (27) which are arranged in the circumferential direction of the drive shaft (12) for limiting the relative rotation between the first and second ring element (18, 19).

9. Hydrodynamic converter according to one of Claims 1 to 8,
**characterized**
**in that** bores (28) are configured in at least one ring element, in particular in the second ring element (19), which bores (28) open into the pressure chambers (21, 22), in particular in the region of the external diameter, for the pressure loading.

10. Hydrodynamic converter according to one of Claims 1 to 9,
**characterized**
**in that** the deflecting device (20) has an adjusting ring (29) which is arranged coaxially with respect to the drive shaft (12) and is connected fixedly to the first ring element (18) so as to rotate with it, the adjusting ring (29) being coupled to the at least one adjusting blade (15) for the transmission of an actuating force or an actuating torque.

11. Hydrodynamic converter according to Claim 10,
**characterized**
**in that** the adjusting ring (29) has at least one cam which interacts with a crank drive (30), in particular a radially arranged lever element (31), the crank drive (30) being coupled to the adjusting blade (15).

12. Hydrodynamic converter according to Claim 10,
**characterized**
**in that** the adjusting ring (29) has an external toothing system which meshes with the external toothing system of a tenon of the adjusting blade, which tenon extends parallel to the centre axis of the adjusting ring.

13. Hydrodynamic converter according to one of Claims 1 to 12,
**characterized**
**in that** the adjusting blade (15) comprises a pivoted blade or a multiple-element blade with at least one pivoted segment.

14. Hydrodynamic converter according to one of Claims 1 to 13,
**characterized**
**in that** the hydrodynamic converter is configured as a counter-rotating converter, and the adjusting device is arranged outside the converter in the axial direction, in particular in a manner which is arranged next to the pump impeller.

15. Hydrodynamic converter according to one of Claims 1 to 14,
**characterized**
**in that** a sensor (40) is provided for the detection of the angular position between the first and second ring element (18, 19).

## Revendications

1. Convertisseur hydrodynamique comportant
- un espace de travail (10) qui peut être traversé par un fluide de fonctionnement,
- une roue de pompe (11) qui est reliée à un arbre d'entraînement (12),
- une roue de turbine (13) qui est reliée à un arbre de sortie,
- un stator (14) et
- au moins une aube de réglage (15) qui peut être réglée au moyen d'un dispositif de réglage (16), dans lequel l'au moins une aube de réglage (15) est une aube de roue de pompe ;
**caractérisé en ce que**
le dispositif de réglage (16) comprend un entraînement de réglage (17) doté d'éléments annulaires (18, 19) qui sont disposés respectivement coaxialement à l'arbre d'entraînement (12), un premier élément annulaire (18) étant relié à l'au moins une aube de réglage (15) au moins indirectement par le biais d'un dispositif de déviation (20) pour la transmission d'une force de réglage ou d'un moment de réglage et le premier élément annulaire (18) pouvant être entraîné en rotation par rapport à un deuxième élément annulaire (19) dans la direction périphérique de l'arbre d'entraînement (12),
les premier et deuxième éléments annulaires (18, 19) formant au moins deux chambres de pression (21, 22) disposées dans la direction périphérique de l'arbre d'entraînement (12), lesquelles peuvent être soumises respectivement à une pression pour la rotation relative entre les premier et deuxième éléments annulaires (18, 19) .

2. Convertisseur hydrodynamique selon la revendication 1,
**caractérisé en ce que**
le dispositif de déviation (20) est formé par l'entraînement de réglage.

3. Convertisseur hydrodynamique selon l'une des revendications 1 ou 2,
**caractérisé en ce que**
l'entraînement de réglage (17) et le dispositif de déviation sont disposés dans un plan axial.

4. Convertisseur hydrodynamique selon l'une des revendications 1 à 3 ;
**caractérisé en ce que**
le deuxième élément annulaire (19) est relié de manière solidaire en rotation à l'arbre d'entraînement (12) et entraîne le premier élément annulaire (18) lors d'une rotation de l'arbre d'entraînement (12).

5. Convertisseur hydrodynamique selon l'une des revendications précédentes,
**caractérisé en ce que**
le premier élément annulaire (18) forme un logement cylindrique (23) dans lequel le deuxième élément annulaire (19) est disposé.

6. Convertisseur hydrodynamique selon l'une des revendications précédentes,
**caractérisé en ce que**
les premier et deuxième éléments annulaires (18, 19) comprennent des ailes (24, 25) s'étendant respectivement radialement et disposées de manière diamétralement opposée, lesquelles limitent les chambres de pression (21, 22) dans la direction périphérique.

7. Convertisseur hydrodynamique selon la revendication 6,
**caractérisé en ce que**
les ailes (24, 25) comprennent des éléments d'étanchéité (26) disposés radialement pour réaliser l'étanchéité des chambres de pression (21, 22).

8. Convertisseur hydrodynamique selon l'une des revendications 1 à 5,
**caractérisé en ce que**
les chambres de pression (21, 22) comprennent des butées (27) disposées dans la direction périphérique de l'arbre d'entraînement (12) pour la limitation de la rotation relative entre le premier et le deuxième élément annulaire (18, 19).

9. Convertisseur hydrodynamique selon l'une des revendications 1 à 8,
**caractérisé en ce que**
des alésages (28) sont formés dans au moins un élément annulaire, en particulier dans le deuxième élément annulaire (19), lesquels alésages débouchent dans les chambres de pression (21, 22), en particulier dans la région du diamètre extérieur, pour l'application de pression.

10. Convertisseur hydrodynamique selon l'une des revendications 1 à 9,
**caractérisé en ce que**
le dispositif de déviation (20) comprend un anneau de réglage (29), lequel est disposé coaxialement à l'arbre d'entraînement (12) et relié de manière solidaire en rotation au premier élément annulaire (18), l'anneau de réglage (29) étant accouplé à l'au moins une aube de réglage (15) pour la transmission d'une force de réglage ou d'un moment de réglage.

11. Convertisseur hydrodynamique selon la revendication 10,
**caractérisé en ce que**
l'anneau de réglage (29) comprend au moins une came qui coopère avec une transmission à manivelle (30), en particulier un élément levier (31) disposé radialement, la transmission à manivelle (30) étant accouplée à l'aube de réglage (15).

12. Convertisseur hydrodynamique selon la revendication 10,
**caractérisé en ce que**
l'anneau de réglage (29) comprend une denture extérieure qui s'engrène avec la denture extérieure d'un tenon de l'aube de réglage, lequel tenon s'étend parallèlement à l'axe médian de l'anneau de réglage.

13. Convertisseur hydrodynamique selon l'une des revendications 1 à 12,
**caractérisé en ce que**
l'aube de réglage (15) comporte une aube orientable ou une aube à plusieurs éléments dotée d'au moins un segment orientable.

14. Convertisseur hydrodynamique selon l'une des revendications 1 à 13,
**caractérisé en ce que**
le convertisseur hydrodynamique est réalisé sous forme de convertisseur contrarotatif et le dispositif de réglage est disposé à l'extérieur du convertisseur dans la direction axiale, en particulier de manière juxtaposée à la roue de pompe.

15. Convertisseur hydrodynamique selon l'une des revendications 1 à 14,
**caractérisé en ce**
**qu'**un capteur (40) pour la détection de la position angulaire est prévu entre le premier et le deuxième élément annulaire (18, 19).
